# EUROPÄISCHE PATENTSCHRIFT

(11) **EP 4 021 997 B1**
(45) Veröffentlichungstag und Bekanntmachung des Hinweises auf die Patenterteilung: **09.10.2024**
(21) Anmeldenummer: 20761143.5
(22) Anmeldetag: 20.08.2020
(51) Int. Cl.: C09D 13/00

(54) **MINE FÜR SCHREIB-, ZEICHEN UND/ODER MALGERÄTE SOWIE VERFAHREN ZUR DEREN HERSTELLUNG**
CORE FOR WRITING, DRAWING AND/OR PAINTING IMPLEMENTS AND METHOD FOR THE PRODUCTION THEREOF
NOYAU POUR INSTRUMENTS D'ÉCRITURE, DE DESSIN ET/OU DE PEINTURE ET SON PROCÉDÉ DE PRODUCTION

(30) Priorität: 27.08.2019 DE 102019006035
(43) Veröffentlichungstag der Anmeldung: 06.07.2022
(73) Patentinhaber: STAEDTLER SE, 90427 Nürnberg (DE)
(72) Erfinder: JAKOB, Martin, 96103 Hallstadt (DE)
(86) Internationale Anmeldenummer: PCT/EP2020/025382
(87) Internationale Veröffentlichungsnummer: WO 2021/037392

(56) Entgegenhaltungen:
- CN-A- 107 163 688
- DE-A1- 4 214 396
- DE-B1- 2 442 983

## Beschreibung

Die Erfindung betrifft Minen für Schreib-, Zeichen- und/oder Malgeräte auf Basis von thermoplastischen Bindemitteln, sowie ein Verfahren zu deren Herstellung.

Minen auf Basis von thermoplastischen Bindemitteln zum Zeichnen, Schreiben und/oder Malen sind prinzipiell bekannt.

So ist aus der DE 102008034014 A1 eine Mine bekannt, die mindestens thermoplastische Bindemittel, Wachs und Füllstoffe beinhaltet. Das eingesetzte Bindemittel liegt hierbei als Polystyrol, Styrol-Acrylnitril, Styrolbudadien, Poleolefine und Acrylnitril-Budadien-Styrol vor.

Nachteilig ist es hierbei anzusehen, dass derartig ausgebildete Minen nicht wasservermalbar/aquarellierbar ausgebildet sind und auf erdölbasierenden Rohstoffen aufgebaut sind.

Weiter sind aus dem Stand der Technik Minen bekannt, die auf der Basis von Cellulosederivaten aufgebaut und hergestellt werden, wobei diese Derivate als Bindemittel dienen. Unter Zugabe von Wasser werden in einem ersten Schritt Rohminen gepresst. In einem zweiten Schritt müssen diese Rohminen getrocknet werden, um eine gebrauchsfertige Mine zu erhalten.

Beispielhaft hierfür seien Minen gemäß DE 4214396 A1 und EP 0836846 B1 genannt.

Hierbei ist es als nachteilig anzusehen, dass mehrere Arbeitsschritte erforderlich sind, um zu einer gebrauchsfertigen Mine zu gelangen. Im Anschluss daran wird Lösungsmittel/Wasser durch Trocknung unter großem Energieverbrauch entfernt und abschließend die Minen mit Wachs, Fett und/oder Öl imprägniert.

Es ist weiter als nachteilig anzusehen, dass aufgrund von mangelnder thermischer Stabilität die meisten Cellulosederivate keinen erhöhten Temperaturen ausgesetzt werden können und damit nicht thermoplastisch verformbar bzw. verarbeitbar sind.

Daher können Herstellverfahren, die eine hohe Temperaturen erfordern, z.B. größer 130°C nicht eingesetzt werden.

Zudem ist es als nachteilig anzusehen, dass für die Herstellung aquarellierbarer Minen, neben Quellungsphase der Cellulosen, Trocknung, eine zusätzliche Imprägnation erforderlich ist.

**Aufgabe** der Erfindung ist es daher, eine Mine zum Schreiben, Zeichnen und/oder Malen zu schaffen, die die genannten Nachteile nicht aufweist. Aufgabe ist es, eine Mine, ausgebildet als Farbmine zu schaffen, die auf Basis von Cellulose aufgebaut ist und insbesondere thermoplastisch verarbeitet bzw. hergestellt werden kann und die wasservermalbar/aquarellier bar ausgebildet ist. Weiter ist es Aufgabe der Erfindung, eine Mine mit möglichst wenig Aufwand, insbesondere wenigen Arbeitsschritten kostengünstig herzustellen.

Diese Aufgabe wurde dadurch gelöst, indem eine Minenzusammensetzung geschaffen wurde, die als Bindemittel Hydroxypropylcellulose (HPC) aufweist. Hierbei hat sich zudem in überraschender Weise gezeigt, dass derartig aufgebaute Minen in einem Arbeitsschritt hergestellt werden können und zudem aquarellier bar ausgebildet sind.

Es wurde eine Mine für Schreib, Zeichen und/oder Malgeräte geschaffen, mindestens umfassend mindestens ein Bindemittel, mindestens ein Wachs, mindestens ein Farbmittel und mindestens einen Füllstoff, wobei die Mine als eine Blei- und/oder Farbstiftmine vorliegt, wobei das mindestens eine Bindemittel als Hyroxypropylcellulose (HPC) vorliegt und wobei der Gehalt an Hydroxypropylcellulose 10 bis 35 Gew.-% beträgt beträgt.

Als besonders bevorzugter Bereich an zugesetztem Bindemittel in Form von HPC sei 16 bis 28 Gew.% genannt.

HPC ist ein Derivat der Cellulose und ist sowohl in Wasser als auch organischen Lösungsmitteln löslich. HPC ist thermoplastisch ausgebildet.

Verwendung findet HPC bis dato als pharmazeutischer Hilfsstoff, als Bindemittel für keramische Massen, Überzüge für Klebstoffe, in Kosmetikartikeln, in Drucktinten und in der Polymerisationstechnik.

Es hat sich in überraschender Weise gezeigt, dass HPC in Minen eingesetzt werden können, ohne dass die orginären Anforderungen des Benutzers an eine Mine verloren gehen. Diese Anforderungen sind die Bruchfestigkeit an sich als auch die Stabilität beim Spitzvorgang, die Radierbarkeit des Abstrichs und die Gleitfähigkeit. Es hat sich zudem herausgestellt, dass die so hergestellten Mine wasservermal bar, aquarellier bar ausgebildet sind.

Diese überraschenden Effekte konnten bei Farbminen festgestellt werden.

Eine derart ausgestaltete Mine umfasst

| | |
|---|---|
| 10 bis 35 Gew.-% | HPC (Bindemittel) |
| 9 bis 50 Gew.-% | Füllstoffe |
| 1,5 bis 14 Gew.-% | Farbmittel (Pigment) |
| 0 bis 30 Gew.-% | Bindemittel 2 |
| 0 bis 30 Gew.-% | Wachs und/oder Öle |
| 0 bis 10 Gew.-% | Tensid |

Vorteilhafter Weise ist der mindestens eine **Füllstoff** ein mineralischer Füllstoff. Beispielhaft seien Füllstoffe der Gruppen umfassend Graphit, hexagonales Bornitrid, Kaolin, Schichtsilikate, Talkum, Kreide, Schwerspat, bunte Pigmente und/oder unbunte Pigmente genannt.

Für Farbstiftminen haben sich Kombinationen aus weißen oder farblosen Füllstoffen, wie hexagonales Bornitrid, Schichtsilikate, usw., mit farbgebenden Pigmenten, wie Azo-Pigmente, Phtalocyanine, Dioxazine, Chinacridone, Eisenoxide, Ruß, Graphit, Ultramarin, Eisen-Cyankomplexe bewährt.

Als weiteres Bindemittel, dem **Bindemittel 2** sei beispielhaft Polyvinylalkohol, Polyethylenglycol und/oder Polyvinylbutyral genannt.

### Beispielrezeptur für eine Farbstiftmine:

| | |
|---|---|
| 23 Gew. -% | HPC (Bindemittel 1) |
| 56 Gew. -% | Kreide |
| 7 Gew.- % | Chinacridone |
| 14 Gew. % | Amidwachs |

Als farbgebendes Mittel bei Farbminen können bunte Pigmente eingesetzt werden. Als Beispiele für derartige Pigmente seien Azo-Pigmente, Phthalocyanine, Dioxazine, Chinacridone, Eisenoxide, Ruß, Graphit, Ultramarin und Eisen-Cyankomplexe genannt.

Als das mindestens eine **Wachs,** können mindestens ein Wachs aus der Gruppe umfassend Fettsäuren, Stearate, Montanwachse, Amidwachse und Paraffine Verwendung finden.

Eingesetzte Öle können beispielsweise als Palmöl, Palmkernöl und/oder Sojaöl vorliegen.

Tenside können als EO/PO-Blockpolymer, ethoxylierte Alkohole und/oder Alkylpolyglycoside sein.

Als Verfahren zur Herstellung einer erfindungsgemäßen Mine hat sich das Verfahren der Extrusion bewährt.

Die erfindungsgemäße Mine wird insbesondere unter Durchführung nachfolgend ausgeführter Schritte hergestellt:
- Mischen und Granulieren aller Rezepturkomponenten der Mine zu einem Minengranulat
- Extrudieren des Minengranulates bei einer Temperatur im Bereich von 100 bis 180°C auf einem Extruder durch ein geeignetes Mundstück zu endlosen Minensträngen
- Kühlen und Verfestigen des endlosen Minenstranges, und
- Schneiden des endlosen Minenstranges auf vorgegebene Länge, insbesondere auf die benötigte Stiftlänge

Je nach Extrusionskopf kann der Minenquerschnitt beliebige Formen annehmen - rund, eckig oder Kombinationen daraus. Des Weiteren besteht die Möglichkeit über eine Mehrfach-Coextrusion verschiedene Minenrezepturen in einem Extrusionskopf zu einer mehrkomponentigen Mine zu verbinden.

Darüber hinaus kann das Minengranulat mittels geeigneter Coextrusionsverfahren mit anderen polymergebundenen Materialien zu einem kompletten Stift extrudiert werden.

## Patentansprüche

1. **Mine** für Schreib, Zeichen und/oder Malgeräte, mindestens umfassend mindestens ein Bindemittel, mindestens ein Wachs, mindestens ein Farbmittel und mindestens einen Füllstoff, **dadurch gekennzeichnet,**
**dass** die Mine als eine Farbstiftmine vorliegt,
**dass** das Farbmittel als buntes Pigment ausgebildet ist,
**dass** das mindestens eine Bindemittel als Hyroxypropylcellulose (HPC) vorliegt
**und dass** die Mine
| | |
|---|---|
| 10 bis 35 Gew.-% | HPC (Bindemittel) |
| 9 bis 50 Gew.-% | Füllstoffe |
| 1,5 bis 14 Gew.-% | Farbmittel (Pigment) |
| 0 bis 30 Gew.-% | Bindemittel 2 |
| 0 bis 30 Gew.-% | Wachs und/oder Öle |
| 0 bis 10 Gew.-% | Tensid |
umfasst.

2. **Verfahren zur Herstellung einer polymergebundenen Mine** nach Anspruch 1, **dadurch gekennzeichnet,**
**dass** die Mine durch Extrusion gebildet wird.

3. **Verfahren zur Herstellung einer polymergebundenen Mine** nach Anspruch 1, **dadurch gekennzeichnet,**
**dass** die Mine unter Durchführung nachfolgend ausgeführter Schritte gebildet wird.
- Mischen und Granulieren aller Rezepturkomponenten der Mine zu einem Minengranulat
- Extrudieren des Minengranulates bei einer Temperatur im Bereich von 100 bis 180°C auf einem Extruder durch ein geeignetes Mundstück zu endlosen Minensträngen
- Kühlen und Verfestigen des endlosen Minenstranges, und
- Schneiden des endlosen Minenstranges auf vorgegebene Länge, insbesondere auf die benötigte Stiftlänge.

## Claims

1. Core for writing, drawing and/or colouring instruments at least comprising at least one binder, at least one wax, at least one colorant and at least one filler, **characterised in that**
the core is present as a coloured pencil core,
the colorant is formed as colour pigment,
the at least one binder is present as hydroxypropylcellulose (HPC) and
the core comprises
| | |
|---|---|
| 10 to 35 weight % | HPC (binder) |
| 9 to 50 weight % | fillers |
| 1.5 to 14 weight % | colorant (pigment) |
| 0 to 30 weight % | binder 2 |
| 0 to 30 weight % | wax and/or oils |
| 0 to 10 weight % | surfactant. |

2. Method for producing a polymer-bound core according to claim 1, **characterised in that** the core is formed by extrusion.

3. Method for producing a polymer-bound core according to claim 1, **characterised in that** the core is formed by carrying out the steps stated in the following:
- mixing and granulating all formulation components of the core to form a core granulate,
- extruding the core granulate at a temperature in the range of 100 to 180° C at an extruder through a suitable mouthpiece to form endless core strands,
- cooling and solidifying the endless core strand and
- cutting the endless core strand to a predetermined length, particularly to the required pencil length.

## Revendications

1. Mine pour instruments d'écriture, de dessin et/ou de peinture, comprenant au moins un liant, au moins une cire, au moins un agent colorant et au moins une substance de charge, **caractérisée par le fait**
**que** la mine se présente comme une mine pour crayon de couleur,
**que** l'agent colorant est conçu en tant que pigment multicolore,
**que** le liant, prévu au minimum, se présente comme de l'hydroxypropylcellulose (HPC) et que ladite mine renferme
de 10 à 35 % en poids de HPC (liant)
de 9 à 50 % en poids de substances de charge
de 1,5 à 14 % en poids d'agent colorant (pigment)
de 0 à 30 % en poids de liant 2
de 0 à 30 % en poids de cire ou d'huiles
de 0 à 10 % en poids de tensioactif.

2. Procédé de fabrication d'une mine à liaison polymère, conforme à la revendication 1,
**caractérisé par le fait**
**que** ladite mine est formée par extrusion.

3. Procédé de fabrication d'une mine à liaison polymère, conforme à la revendication 1,
**caractérisé par le fait**
**que** ladite mine est formée par exécution des étapes effectuées ci-après :
- mélange et granulation de tous les composants de la recette de la mine, pour obtenir un granulat de mine
- extrusion dudit granulat de mine sur une extrudeuse à une température située dans la plage de 100 à 180 °C, à travers un embout adéquat, pour obtenir des boudins de mine sans fin
- refroidissement et solidification du boudin de mine sans fin, et
- sectionnement dudit boudin de mine sans fin à une longueur préétablie, notamment à la longueur de crayon requise.
